(19) Europäisches Patentamt / European Patent Office / Office européen des brevets

(11) **EP 2 816 745 A1**

(12) **EUROPEAN PATENT APPLICATION**

(43) Date of publication:
**24.12.2014 Bulletin 2014/52**

(51) Int Cl.:
*H04B 10/293* (2013.01)    *H04Q 11/00* (2006.01)

(21) Application number: **13172865.1**

(22) Date of filing: **19.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **De Valicourt, Guilhem**
**91620 Nozay (FR)**
• **Ghazisaeidi, Amirhossein**
**91620 Nozay (FR)**

• **Antona, Jean-Christophe**
**91620 Nozay (FR)**
• **Bigo, Sébastien**
**91620 Nozay (FR)**

(74) Representative: **Camus, Olivier Jean-Claude**
**Cabinet Camus Lebkiri**
**87, rue Taitbout**
**75009 Paris (FR)**

Remarks:
Amended claims in accordance with Rule 137(2) EPC.

(54) **Method for determining parameter(s) of a transmission system with cascaded devices based on a semiconductor gain medium**

(57)    A method is intended for determining a number of cascaded devices based on a semiconductor gain medium and/or a range of acceptable values of an input optical power for a transmission system having a set of characteristics, this method comprising:
- a step (i) of computing a model of penalty, representative of a difference between required first and second OSNRs to ensure a chosen bit error rate respectively after traversing and without traversing the N devices, and depending on the number N, a value P representing an input optical power into the transmission system, a coefficient $\beta$ depending on a format of optical signal modulation, and the set of characteristics, and
- a step (ii) of computing a maximum value of number N and/or a range of acceptable values P for a given number N from the computed model of penalty and from at least one chosen algorithm.

Fig.3

EP 2 816 745 A1

## Description

## Technical field

The present invention relates to transmission systems comprising cascaded devices based on a semiconductor gain medium, and more precisely to determination of parameter(s) of such transmission systems.

One means here by "device based on a semiconductor gain medium" any active electronic component (or element) comprising a semiconductor gain medium that can be used for optical amplification. So, it may be a semiconductor optical amplifier (or SOA), or a reflective semiconductor optical amplifier (or RSOA), or a hybrid semiconductor optical amplifier (or hybrid SOA), or a MMI-SOA, or else an InP-Membrane, for instance.

Moreover, one means here by "parameter" a number of cascaded devices based on a semiconductor gain medium or a range of acceptable values of an input optical power.

## Background of the invention

The evolution of new Internet services is likely to induce a bursty and distributed traffic in some transmission systems, such as metro networks. As an example, metropolitan networks need to collect all different traffic coming from an access segment and are therefore directly impacted by the introduction of increasing data bit rates. So, bandwidth on demand requires further flexibility as content delivery networks become more and more closer from the metro segment.

To get such a flexibility one may use an optical packet technology, because it allows high network efficiency thanks to the sub-wavelength granularity. Therefore, architectures based on wavelength division multiplexing (or WDM) and using packet optical add/drop multiplexers (or POADMs) are promising candidates for the future evolutions of packet-switched networks. Indeed, optical transparency reduces the electronic processing used for aggregating the incoming traffic for the line cards, since optical packets can directly transit from a POADM node to another POADM node, which allows energy saving compared to reconfigurable optical add/drop multiplexer (or ROADM).

In each POADM node it is possible to use a packet blocker that allows increasing network efficiency by erasing or transmitting upcoming optical packets and enabling spatial re-use of the wavelengths. In such a packet blocker one optical gate per wavelength is needed to control each wavelength separately. Colorless optical gates such as Mach-Zehnder modulators (or MZMs), ring resonator structures, or variable optical attenuators (or VOAs) are considered as potential candidates for the packet blockers. However MZMs and ring resonators exhibit a low extinction ratio (between 10 dB and 15 dB) as well as VOAs for a relatively short switching time (< 15 ns). Therefore active devices are desirable to overcome this drawback but also to provide a fast switching time and to compensate the node losses avoiding the use of extra optical amplifiers such as EDFAs (Erbium Doped Fiber Amplifiers). Characteristics, such as large optical bandwidth, high extinction ratio, high gain and fast switching time, make (R)SOA devices promising candidates for packet blockers even though they induce an optical noise and have a non-linear behavior.

Because of the above mentioned drawbacks of (R)SOA devices, it would be of a great interest to compute the number of (R)SOA devices that can be reasonably cascaded into a transmission system. This would be notably useful in the case of a network restoration requiring an increased number of crossed POADM nodes due to a traffic re-routing over a new path.

But no known solution allows to compute such a number and/or the maximum input optical power given the number of cascaded (R)SOA devices for a transmission system.

Moreover, SOA devices could be used to answer the ever-growing capacity demand in a context of a predicted saturation of the legacy transmission system capacity using C-band amplifiers and single mode optical fibres. A potential gain of three or four times on the transmission capacity with respect to current systems based on C-band Erbium Doped Fiber Amplifiers (or EDFAs) may be achieved by Semi-conductor Optical Amplifiers (SOA) as they exhibit more than 100 nm operation bandwidth. In this context, it is also crucial to determine the maximum number of cascaded devices.

## Summary of the invention

So, an objective of the invention is to improve the situation, notably by allowing a computation of a maximum value of the number of (R)SOA devices than can be cascaded into a transmission system and/or of a range of acceptable values of input optical power that can be used in a transmission system comprising a given number of cascaded (R)SOA devices, in order to balance the impact of noise accumulation and of non-linear effects.

To this effect the invention notably provides a method, intended for determining a number of cascaded devices based on a semiconductor gain medium and/or a range of acceptable values of an input optical power for a transmission system having a set of characteristics (such as an optical fibre type), and comprising:

- a step (i) of computing a model of penalty, representative of a difference between required first and second optical signal-to-noise ratios (preferably in dB) to ensure a chosen bit error rate respectively after traversing and without traversing the N devices, and depending on number N, a value P representing an input optical power into the transmission system, a coefficient $\beta$ depending on a format of optical signal modulation that is intended to be used into the transmission system, and the set of characteristics, and

- a step (ii) of computing a maximum value of number N and/or a range of acceptable values P for a given number N from the computed model of penalty and from at least one chosen algorithm intended for computing OSNR degradation induced by the devices.

It is important to note that steps (i) and (ii) may be to sub-steps of one main step.

This method according to the invention may include additional characteristics considered separately or combined, and notably:

- in step (i) the model of penalty may depend on another model representing the devices and using the set of characteristics;
- in step (i) the model of penalty may depend on the product $P^\beta*N$;

    ➢ in step (ii) one may compute a non-linear threshold defining a minimum value of product $P^\beta*N$ that leads to a chosen penalty threshold from the computed model of penalty, and then one may deduce the maximum value of number N from this computed non-linear threshold;

    ○ in step (ii) one may compute a first group of data representing a first curve of a maximum input optical power as a function of number N and of the computed non-linear threshold, and a second group of data representing a second curve of a minimum input optical power, corresponding to noise introduced by the cascaded devices, as a function of number N and of a noise factor of the set of characteristics, then one may deduce the maximum value of number N from a point of intersection between the computed first and second curves;

    ■ in step (ii) one may deduce the range of acceptable values P for a given number N from the computed first and second curves;

- in the case where the transmission system comprises portions, each comprising at least an optical fiber, a device and two amplifiers, in step (ii) one may compute a maximum value of number N from the following equation: $\frac{N}{N_{SOA}} + \sum_{k=1}^{N} \frac{1}{N_k} \leq 1$ , where $N_k$ is the number of portions (or spans), k is the type of optical fibre, and $N_{SOA}$ is the number of devices.

The invention further proposes a computer program product comprising a set of instructions arranged, when it is executed by processing means, for performing a method such as the one above introduced to allow determination of a number of cascaded devices based on a semiconductor gain medium and/or a range of acceptable values of an input optical power for a transmission system having a set of characteristics.

The invention further proposes another method, intended for establishing a path in a switched optical network, and comprising:

- determining a projected path between two endpoints in this network,
- determining a number of cascaded devices based on a semiconductor gain medium along this projected path,
- estimating as a function of this number of cascaded devices and of an input optical power an optical signal-to-noise ratio penalty of an optical signal after traversing through this projected path, and
- deciding, based on this determined penalty, whether this projected path is feasible or not, and if so, initiating set-up of this projected path.

This method may further comprise determining a range of acceptable input power values into the projected path and adjusting the input power to match this determined range.

**Brief description of the figures**

Other features and advantages of the invention will become apparent on examining the detailed specifications hereafter and the appended drawings, wherein:

- figure 1 illustrates in a diagram an example of model of (OSNR) penalty plotted as a function of the product between the SOA average input optical power and the number N of cascaded SOAs,
- figure 2 illustrates in a diagram an example of evolution of (R)SOA input optical power as a function of the maximum number N of cascaded (R)SOA devices, and an example of evolution of the minimum noise introduced by the N cascaded (R)SOA devices as a function of number N, for one SOA device and two different types of RSOA devices, and
- figure 3 illustrates an example of algorithm comprising sub steps implementing an embodiment of a first method according to the invention.

**Detailed description of the preferred embodiment**

The appended drawings may serve not only to complete the invention, but also to contribute to its understanding, if need be.

The invention aims, notably, at offering a (first) method intended for allowing determining a number of cascaded devices based on a semiconductor gain medium and/or a range of acceptable values of an input optical power for a transmission system having a set of characteristics.

For instance, the transmission system can be made of N cascaded portions, each comprising in series an optical fiber, an input amplifier (for instance an EDFA), a device based on a semiconductor optical amplifier (or SOA) and an output amplifier (for instance an EDFA), for instance.

But a transmission system could be also a ring metro network comprising N packet optical add/drop multiplexers (or POADMs), interconnected by means of optical fibers and each comprising M devices used in parallel and each based on a semiconductor gain medium, such as a SOA, or a reflective semiconductor optical amplifier (or RSOA), or a hybrid semiconductor optical amplifier (or hybrid SOA), or a MMI-SOA, or else an InP-Membrane, for instance.

In the following description it will be considered, as an example, that the semiconductor gain medium is a (R)SOA.

The (first) method, according to the invention, comprises two steps (i) and (ii), which may be implemented by a computer program product comprising a set of instructions that can run in an electronic equipment comprising processing means, such as a computer. It is important to note that steps (i) and (ii) may be to sub-steps of one main step.

A first step (i) of the method comprises computing a model of penalty that is representative of a difference between a required first optical signal-to-noise ratio (or OSNR, preferably in dB) intended for ensuring a chosen bit error rate (or BER) after traversing the N devices of the transmission system, and a second optical signal-to-noise ratio (or OSNR, preferably in dB) to ensure the same chosen bit error rate without traversing the same N devices. This model of penalty depends on the number N, a value P, which represents an input optical power $P_{in\ SOA}$ into the transmission system, a coefficient $\beta$ depending on a format of the optical signal modulation that is intended to be used into the transmission system, and the set of characteristics (of the (R)SOA devices and/or the portion (including an optical fibre, for instance) and/or a chosen limit).

This model of penalty can be computed iteratively (R)SOA after (R)SOA. Indeed, it is possible to estimate iteratively the degradation of the extinction ratio after the cascade of (R)SOAs and then to deduce the OSNR penalty, whatever the input power or number of cascaded (R)SOAs.

Different modulation formats can be considered, and notably OOK NRZ, QPSK and PDM-QPSK. For instance, when the modulation format is OOK NRZ, the coefficient $\beta$ may be equal to 1. When the modulation format is QPSK, the coefficient $\beta$ may be equal to 1.1 for the same device.

The penalty model may depend from the considered modulation format. For instance, when the modulation format is OOK NRZ, an analytical penalty model can be determined.

Preferably, in step (i), before computing the model of penalty, one may compute another model that represents (or models) each device and that uses its set of characteristics (gain, noise factor, factor $\alpha$, for instance). For instance, in the case where the device comprises a SOA, the other model may be a modified instantaneous (i.e. with carrier lifetime = 0 s) Agrawal model.

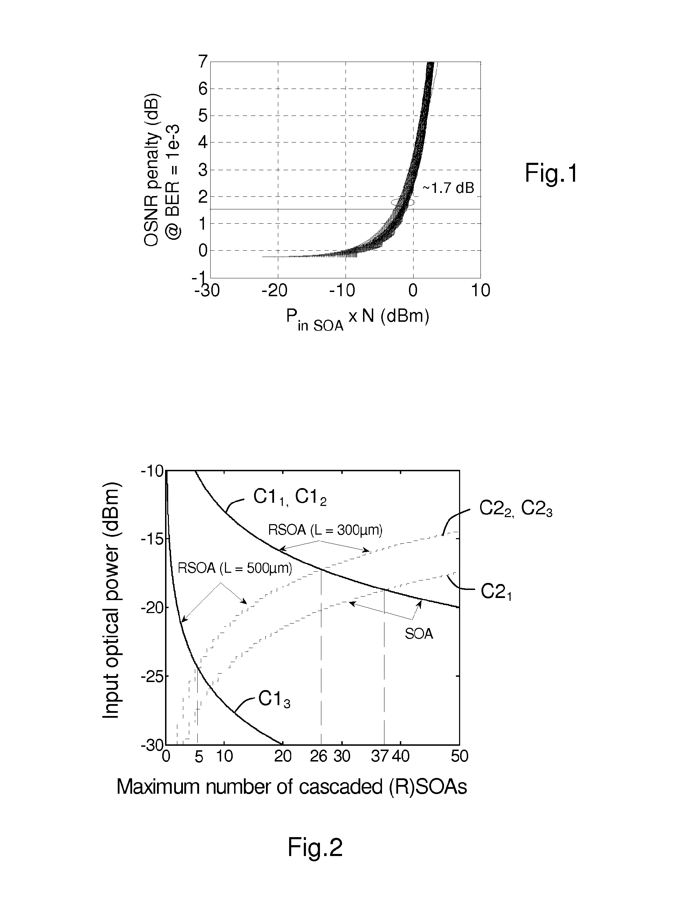

For instance, the model of penalty may depend on the product $P^{\beta}*N$. An example of such a model of penalty is illustrated in figure 1. In this example which corresponds to the modulation format OOK NRZ and to a chosen BER equal to $10^{-3}$, the model of (OSNR) penalty is plotted against the product between the SOA average input optical power $P_{in\ SOA}$ (or P) and the number N of cascaded SOA (in dB scale, i.e. $10\log10[N*P_{in\ SOA}$ (dBm)]), for $P_{in\ SOA}$ varying between -30 dBm and +7 dBm and a number N varying between 2 and 50. One may observe in this figure 1 that all points (corresponding to different values of N) gather almost on a single curve. That is the reason why the OSNR penalty is modelled by the product $P_{in\ SOA}{}^{\beta}*N$ in this example of embodiment where $\beta = 1$.

A second step (ii) of the method comprises computing a maximum value of number N and/or a range of acceptable values P (here $P_{in\ SOA}$) for a given number N, from the model of penalty computed in the first step (i) and from at least one chosen algorithm intended for computing the OSNR degradation induced by the N devices.

If the range of acceptable input powers as a function of a number of (R)SOAs has been calculated, the (actual) input power of the transmission system must be adjusted accordingly, if necessary. If the maximum number N of (R)SOAs that can be cascaded has been determined, the (actual) input power of the transmission system must be adjusted accordingly to the optimized input optical power and needs to be stable enough.

For instance, The OSNR degradationcan be computed by means of the well-known formula: $1/OSNR_{out} = 1/OSNR_{in} + NF.h.v.Bref/P_{in}$ where the output OSNR ($OSNR_{out}$) depends on the input OSNR ($ONSR_{in}$), the input optical power ($P_{in}$) and the Noise factor (NF) of the device (all other terms are constant).

For instance, when the model of penalty depends on the product $P^{\beta}*N$, during step (ii) one may compute a non-linear threshold NLT that defines a minimum value of this product $P^{\beta}*N$ that leads to a chosen (OSNR) penalty threshold from the model of penalty computed in the first step (i). For instance, the (OSNR) penalty threshold may be chosen equal to 1.5 dB in the case corresponding to figure 1.

Then one may deduce the maximum value of number N from the computed non-linear threshold NLT and the chosen algorithm.

The model of (OSNR) penalty that depends on the product $P^{\beta}*N$ allows to predict the level of distortions (introduced by the N devices) versus the input optical power P (here $P_{in\ SOA}$). Therefore, it can also be used to derive the input optical power P (here $P_{in\ SOA}$) that guarantees a chosen level of distortions (i.e. the chosen BER).

In fact, the largest number N of cascadable devices is obtained for an optimal trade-off between distortions and noise. Noise accumulates from one device to the next device. So, to mitigate its impact, a higher input optical power P (here $P_{in\ SOA}$) needs to be injected into the (R)SOA. However, the non-linear behavior of a (R)SOA limits the maximum input optical power P (here $P_{in\ SOA}$) that can be used.

So, during step (ii) one may compute a first group of data representing a first curve C1 of the maximum input optical power as a function of number N and of the computed non-linear threshold NLT, and a second group of data representing a second curve C2 of the minimum input optical power (corresponding to the maximum acceptable noise introduced by the N cascaded devices) as a function of number N and of the noise factor (or NF) of the set of device characteristics. Then, one may deduce the maximum value of number N from the point of intersection between the computed first C1 and second C2 curves.

To calculate the ONSR penalty for a given SOA and for the modulation format OOK NRZ, one may fit the measured optical gain with one classic SOA equation and then one may measure the noise factor (NF). All pertinent parameters are usually given with the concerned SOA device. Then one may calculate the ONSR penalty for a given input optical power into the SOA and a given number of cascaded SOA from the optical gain curve (the NF is not used at this step). Then, if one plots the OSNR penalty depending on the product P*N, one may observe that all curves fit into a single one. Then if one decides that the maximum acceptable ONSR penalty is equal to 1.5 dB, for instance, one may look for the corresponding value of the product P*N (in dBm). If this product is equal to 0 dBm, for instance, then $10*log10(PxN) = NLT = 0$, where P and N are linear. So, one may calculate the first curve C1 (for each P, one N is found).

Then one may use the expression "$1/OSNR_{out} = 1/OSNR_{in} + NF.h.v.Bref/P_{in}$" to calculate the second curve C2, because NF is already known.

For QPSK and QAM modulation formats, the optical gain curve of the SOA can be fit with a classic model (the SOA dynamic gain equation of each transmission section can be solved using the 4th-order Runge-Kutta method (for instance described in the document of A. Ghazisaedi and L-A Rusch, in J. Lightwave Technol, 20, 21, 2011). But in this case one needs to use more device parameters such as NF, alpha and the carrier lifetime (however any other model taking into account these device parameters could be used).

Then one may use a simulator to calculate the ONSR penalty (this time the $P^{\beta}*N$ rule is used to fit all curves into a single one), and then one may find the non-linear threshold (NLT) of the SOA device. The same method as the one described for the modulation format OOK NRZ can be used to calculate the first curve C1. In this case, NF is known from the simulator, and one may directly calculate the ONSR degradation at low input power (but it is equivalent to do it with the analytic formula mentioned above).

An example of diagram of the evolution of (R)SOA input optical powers ($C1_1$, $C1_2$, $C1_3$) with respect to the maximum number N of cascaded devices is illustrated in figure 2 for one SOA device and two different types of RSOA devices (with respective lengths L = 300 $\mu$m and L = 500 $\mu$m). In the same diagram the minimum noise ($C2_1$, $C2_2$, $C2_3$) introduced by the N cascaded devices is also plotted as a function of number N for the same SOA device and the two same types of RSOA devices (with respective lengths L = 300 $\mu$m and L = 500 $\mu$m).

The OSNR degradation (or introduced noise) C2 is calculated based on the noise factor (or NF) of the different devices. In this illustrated example an OSNR margin of 3 dB (for a chosen BER equal to $10^{-3}$) with respect to the second OSNR (ensuring the chosen BER without traversing the N devices - i.e. "in back-to-back") is used to take into account aging and implementation penalties as well as 1.5 dB of penalty coming from the non-linear behavior of the (R)SOA (in the worst case estimation). The maximum number N (of cascaded devices) for a given input optical power P is reached when the first OSNR (ensuring the chosen BER after traversing the N devices) is obtained (here first OSNR = -15.5 dB in the 0.1 nm channel). For a given type of device the OSNR is expected to remain above the noise limit (curve C2) and the product $P^{\beta}*N$ needs to remain below the NLT (curve C1). Therefore the maximum number N (of cascaded devices) can be found when curve C1 intersect curve C2.

RSOAs specially designed for access network (i.e. with L = 500 $\mu$m, gain = 25 dB, NF = 11 dB and NLT = -17 dBm) show a high non-linearity that limits the maximum number N of cascaded devices to approximately 5 with an OOK NRZ modulation format at 10 Gbit/s, when the chosen targeted OSNR is equal to 15.5 dB. With RSOA presenting a reduced optical gain (i.e. with L = 300 $\mu$m, gain = 7 dB, NF = 11 dB and NLT = -3 dBm), approximately 26 devices may be cascaded with an OOK NRZ modulation format at 10 Gbit/s, when the chosen targeted OSNR is equal to 15.5 dB. With SOA presenting a high saturation power (i.e. with gain = 14 dB, NF = 8 dB and NLT = -3 dBm), approximately 37 devices may be cascaded with an OOK NRZ modulation format at 10 Gbit/s, when the chosen targeted OSNR is equal to 15.5 dB.

It is important to note that during step (ii) one may deduce the range of acceptable values P for a given number N from the computed first C1 and second C2 curves. In fact, this range is centred on the value of the input optical power P that corresponds to the maximum number N at the intersection between curves C1 and C2.

It is important to note that in a transmission system (or link) each (R)SOA brings non-linear distortions and amplification noise, each additional optical amplifier brings only amplification noise (before or after the (R)SOA), and each optical fibre section brings non-linearities. So, a transmission system (or link) can be seen as a concatenation of N portions connected therebetween and each comprising at least an optical fiber, an input amplifier, a device and an output amplifier.

One may assume that each input amplifier preceding a SOA enables to inject optical signal into the SOA at the desired input optical power P whatever the optical fibre loss or optical fibre type.

The induced OSNR degradation depends on the input optical power P into the preceding optical fibre as well as the optical fibre loss. Each SOA/amplifier block (comprising a SOA and the following output amplifier) can be modelled by an equivalent SOA bringing noise and non-linearities (NF, $\alpha_k$, where k = 1 to N), followed by a perfect noiseless output amplifier that enables to inject an optical signal into the optical fibre of the next portion (k+1) at the desired input optical power.

If one assumes that the non-linear distortions induced by the optical fibres and SOAs can be accumulated, so that a non-linear inequality constraint

$$\sum_{k=1}^{N_{fibre}} \alpha_k \frac{P_k}{P^0} \leq 1$$ is used for each portion k (whatever its type: optical fibre/input amplifier block or (R)SOA/output amplifier block), then an optimization of the input optical power into the optical fibres and (R)SOAs can be done, and the optimum configuration amounts to optimizing separately optical fibres and (R)SOA blocks. So, the SOA input optical power P will remain unchanged

$$\left( P = P^0 \sqrt{\frac{TOSNR}{\alpha . OSNR^{0\prime}}} \right.$$ , where TOSNR is the targeted OSNR), the optimal input optical power into each optical fibre of a portion k will be equal to

$$\overline{P}_k = P^0 \sqrt{\frac{TOSNR}{\alpha\prime_k . OSNR_k^0}}$$ , and the estimation of the maximum number N of cascaded (R)SOAs will come from inequality $\frac{N}{N_{SOA}} + \sum_{k=1}^{N_{fibre}} \frac{1}{N_k} \leq 1$, where $N_k$

is the number of span where k is the type of optical fibre, and $N_{SOA}$ is the number of SOAs.

If the transmission system is composed of N repetitions of the same portion, then the maximum value of number N is given by : $\frac{1}{N} = \frac{1}{N_{SOA}} + \frac{1}{N_{fibre}}$.

In a variant of embodiment, it is possible to model the induced distortions coming from (R)SOAs and optical fibres as completely separated, with separate non-linear thresholds (NLT), and/or to consider that the optical fibre blocks can be optimized or set in any other way. In this case, the optimization is equivalent to setting a new targeted OSNR (TOSNR), with modified accumulation laws for the amplification noise

$$\left( \sum_{k=1}^{N_{fibre}} \frac{P_k}{P^0} * \frac{TOSNR}{OSNR_k^0} + \frac{TOSNR}{OSNR_{fibre\,k}} \leq 1 \right), \text{ where}$$

$OSNR_{fibre\,k}$ is the degradation of the OSNR brought by the optical fibre/input amplifier block preceding the kth SOA/output amplifier block. The general method can then be applied, following this new law for the degradation of the OSNR.

This (first) method can be notably used during conception of an optical network, such as a ring metro network, for instance.

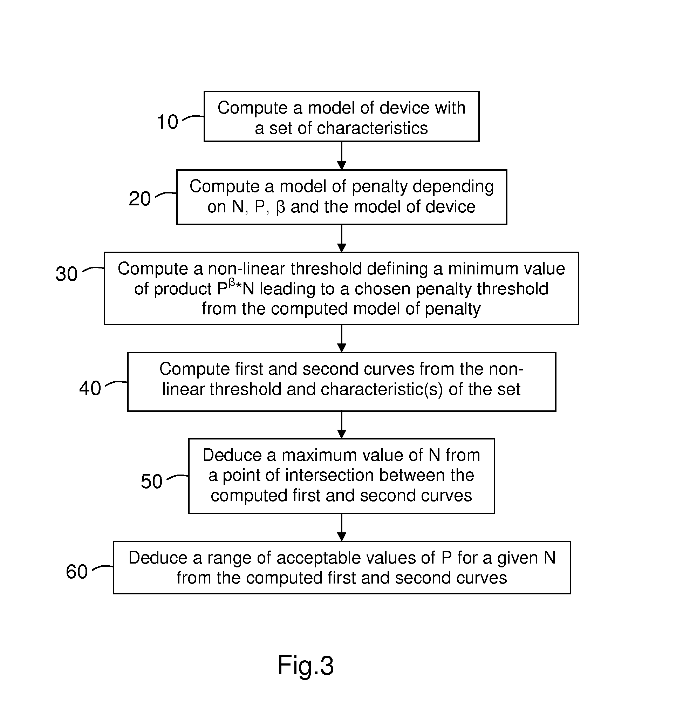

A non-limiting example of algorithm implementing an embodiment of the (first) method according to the invention is illustrated in figure 3.

This algorithm starts with a sub step 10 during which one computes a model that represents (or models) each (R)SOA device of the transmission system and that uses its set of characteristics (gain, noise factor, factor $\alpha$, for instance).

Then, in a sub step 20 one computes a model of penalty depending on the number N, a value P, which represents an input optical power $P_{in\,SOA}$ into the transmission system, a coefficient $\beta$ depending on a format of the optical signal modulation that is intended to be used into the transmission system, and the device model computed in sub step 10.

Sub steps 10 and 20 are parts of the first step (i).

In this example, it is considered that the model of penalty depends on the product $P^{\beta}*N$. So, in a sub step 30 one computes a non-linear threshold NLT defining a minimum value of product $P^{\beta}*N$ that leads to a chosen penalty threshold from the model of penalty computed in sub step 20.

Then in a sub step 40 one computes a first group of data representing a first curve C1 of the maximum input optical power P as a function of number N and of the computed non-linear threshold NLT, and a second group of data representing a second curve C2 of a minimum noise introduced by the cascaded devices as a function of number N and of a noise factor (NF) of the set of device characteristics.

Then in a sub step 50 one deduces the maximum value of number N from a point of intersection between the computed first C1 and second C2 curves.

In a further sub step 60 one may also deduce the range of acceptable values P for a given number N from the computed first C1 and second C2 curves.

Sub steps 30 to 60 are parts of the second step (ii).

It is important to note that the invention also proposes a (second) method, intended for establishing a path in a switched optical network and comprising at least four steps. So this second method concerns more specifically the control plane.

A first step comprises determining a projected path between two endpoints in this network. This first step can be performed by using a well-known path computation algorithm such as Dijkstra, for instance.

A second step comprises determining a number of cascaded devices based on a semiconductor gain medium along the determined projected path.

A third step comprises estimating as a function of the determined number of cascaded devices and of an input optical power (i.e. product $P^{\beta}*N$) an optical signal-to-noise ratio penalty of an optical signal after traversing through the projected path.

A fourth step comprises deciding, based on the determined penalty, whether the determined projected path is feasible or not, and if so, initiating set-up of this projected path. This fourth step can be performed by using a well-known control plane signaling, such as RSVP-TE, for instance. If the determined projected path is not feasible, another path must be found or the connection is impossible.

This second method may further comprise a fifth step comprising determining a range of acceptable input power values into the determined projected path and adjusting the input power to match this determined range.

This second method can be extremely useful when a restoration of the network is needed and the number of crossed POADM nodes increases.

The invention is not limited to the embodiments of method described above, only as examples, but it encompasses all alternative embodiments which may be considered by one skilled in the art within the scope of the claims hereafter.

**Claims**

1. Method for determining a number of cascaded devices based on a semiconductor gain medium and/or a range of acceptable values of an input optical power for a transmission system having a set of characteristics, said method comprising:

   - a step (i) of computing a model of penalty, representative of a difference between required first and second optical signal-to-noise ratios to ensure a chosen bit error rate respectively after traversing and without traversing said N devices, and depending on said number N, a value P representing an input optical power into said transmission system, a coefficient $\beta$ depending on a format of optical signal modulation that is intended to be used into said transmission system, and said set of characteristics, and
   - a step (ii) of computing a maximum value of said number N and/or a range of acceptable values of said value P for a given number N from said computed model of penalty and from at least one chosen algorithm intended for computing optical signal-to-noise ratio degradation induced by said devices.

2. Method according to claim 1, wherein in step (i) said model of penalty depends on another model representing said devices and using said set of characteristics.

3. Method according to one of claims 1 and 2, wherein in step (i) said model of penalty depends on the product $P^{\beta}*N$.

4. Method according to claim 3, wherein in step (ii) one computes a non-linear threshold defining a minimum value of said product $P^{\beta}*N$ leading to a chosen penalty threshold from said computed model of penalty, and then one deduces said maximum value of said number N from said computed non-linear threshold.

5. Method according to claim 4, wherein in step (ii) one computes a first group of data representing a first curve of a maximum input optical power as a function of said number N and of said computed non-linear threshold, and a second group of data representing a second curve of a minimum input optical power, corresponding to noise introduced by said cascaded devices, as a function of said number N and of a noise factor of said set of characteristics, then one deduces said maximum value of said number N from a point of intersection between said computed first and second curves.

6. Method according to claim 5, wherein in step (ii) one deduces said range of acceptable values P for a given number N from said computed first and second curves.

7. Method according to one of claims 1 to 6, wherein in the case where said transmission system comprises portions, each comprising at least an optical fiber, a device and two amplifiers, in step (ii) one computes a maximum value of said number N from the following inequality:

$$\frac{N}{N_{SOA}} + \sum_{k=1}^{N} \frac{1}{N_k} \leq 1 \ , \quad \text{where } N_k \text{ is the}$$

number of portions, k is the type of optical fibre, and $N_{SOA}$ is the number of devices.

8. Method according to one of claims 1 to 7, wherein it is used in a control plane for evaluating feasibility of a transmission link before establishment of a connection.

9. Computer program product comprising a set of instructions arranged, when it is executed by processing means, for performing the method according to one of claims 1 to 8 to allow determination of a number of cascaded devices based on a semiconductor gain medium and/or a range of acceptable values of an input optical power for a transmission system having a set of characteristics.

10. Method for establishing a path in a switched optical network, comprising:

- determining a projected path between two endpoints in said network,
- determining a number of cascaded devices based on a semiconductor gain medium along said projected path,
- estimating as a function of said number of cascaded devices and of an input optical power an optical signal-to-noise ratio penalty of an optical signal after traversing through said projected path, and
- deciding, based on said determined penalty, whether said projected path is feasible or not, and if so, initiating set-up of said projected path.

11. Method according to claim 10, wherein it comprises determining a range of acceptable input power values into said projected path and adjusting the input power to match said determined range.

**Amended claims in accordance with Rule 137(2) EPC.**

1. Method for determining a number of cascaded devices based on a semiconductor gain medium and/or a range of acceptable values of an input optical power for a transmission system having a set of characteristics, said method comprising:

- a step (i) of computing a model of penalty, representative of a difference between required first and second optical signal-to-noise ratios to ensure a chosen bit error rate respectively after traversing and without traversing N devices, and depending on said number N, a value P representing an input optical power into said transmission system, a coefficient $\beta$ depending on a format of optical signal modulation that is intended to be used into said transmission system, and said set of characteristics, and
- a step (ii) of computing a maximum value of said number N and/or a range of acceptable values of said value P for a given number N from said computed model of penalty and from at least one chosen algorithm intended for computing optical signal-to-noise ratio degradation induced by said devices.

2. Method according to claim 1, wherein in step (i) said model of penalty depends on another model representing said devices and using said set of characteristics.

3. Method according to one of claims 1 and 2, wherein in step (i) said model of penalty depends on the product $P^\beta \cdot N$.

4. Method according to claim 3, wherein in step (ii) one computes a non-linear threshold defining a minimum value of said product $P^\beta \cdot N$ leading to a chosen penalty threshold from said computed model of penalty, and then one deduces said maximum value of said number N from said computed non-linear threshold.

5. Method according to claim 4, wherein in step (ii) one computes a first group of data representing a first curve of a maximum input optical power as a function of said number N and of said computed non-linear threshold, and a second group of data representing a second curve of a minimum input optical power, corresponding to noise introduced by said cascaded devices, as a function of said number N and of a noise factor of said set of characteristics, then one deduces said maximum value of said number N from a point of intersection between said computed first and second curves.

6. Method according to claim 5, wherein in step (ii) one deduces said range of acceptable values P for a given number N from said computed first and second curves.

7. Method according to one of claims 1 to 6, wherein in the case where said transmission system comprises portions, each comprising at least an optical fiber, a device and two amplifiers, in step (ii) one computes a maximum value of said number N from the following inequality:

$$\frac{N}{N_{SOA}} + \sum_{k=1}^{N} \frac{1}{N_k} \leq 1 \ ,$$

where $N_k$ is the number of portions, k is the type of optical fibre, and $N_{SOA}$ is the number of devices.

8. Method according to one of claims 1 to 7, wherein it is used in a control plane for evaluating feasibility of a transmission link before establishment of a connection.

9. Computer program product comprising a set of instructions arranged, when it is executed by processing means, for performing the method according to one of claims 1 to 8 to allow determination of a number of cascaded devices based on a semiconductor gain medium and/or a range of acceptable values of an input optical power for a transmission system having a set of characteristics.

10. Method for establishing a path in a switched optical network, comprising:

- determining with the method according to any of claims 1 to 8, a number of cascaded devices based on a semiconductor gain medium along a projected path between two endpoints in said network,

- estimating as a function of said number of cascaded devices and of an input optical power an optical signal-to-noise ratio penalty of an optical signal after traversing through said projected path, and

- deciding, based on said determined penalty, whether said projected path is feasible or not, and if so, initiating set-up of said projected path.

11. Method according to claim 10, wherein it comprises determining a range of acceptable input power values into said projected path and adjusting the input power to match said determined range.

Fig.1

Fig.2

```
         ┌─────────────────────────────┐
   10 ─┤ Compute a model of device with │
         │   a set of characteristics    │
         └─────────────────────────────┘
                      │
                      ▼
         ┌─────────────────────────────┐
   20 ─┤ Compute a model of penalty     │
         │ depending on N, P, β and the  │
         │        model of device        │
         └─────────────────────────────┘
                      │
                      ▼
   ┌─────────────────────────────────────────────┐
30 ─┤ Compute a non-linear threshold defining a    │
   │ minimum value of product P^β*N leading to a   │
   │ chosen penalty threshold from the computed    │
   │              model of penalty                 │
   └─────────────────────────────────────────────┘
                      │
                      ▼
   ┌─────────────────────────────────────────────┐
40 ─┤ Compute first and second curves from the non-│
   │ linear threshold and characteristic(s) of the │
   │                   set                         │
   └─────────────────────────────────────────────┘
                      │
                      ▼
   ┌─────────────────────────────────────────────┐
50 ─┤ Deduce a maximum value of N from a point of  │
   │ intersection between the computed first and   │
   │              second curves                    │
   └─────────────────────────────────────────────┘
                      │
                      ▼
   ┌─────────────────────────────────────────────┐
60 ─┤ Deduce a range of acceptable values of P for │
   │ a given N from the computed first and second  │
   │                  curves                       │
   └─────────────────────────────────────────────┘
```

Fig.3

**EP 2 816 745 A1**

| | Europäisches Patentamt / European Patent Office / Office européen des brevets | **EUROPEAN SEARCH REPORT** | Application Number EP 13 17 2865 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAU TANG: "The Multispan Effects of Kerr Nonlinearity and Amplifier Noises on Shannon Channel Capacity of a Dispersion-Free Nonlinear Optical Fiber", JOURNAL OF LIGHTWAVE TECHNOLOGY, IEEE SERVICE CENTER, NEW YORK, NY, US, vol. 19, no. 8, 1 August 2001 (2001-08-01), XP011030012, ISSN: 0733-8724 * the whole document * | 1-11 | INV. H04B10/293 H04Q11/00 |
| A | US 6 952 529 B1 (MITTAL ROHIT [US]) 4 October 2005 (2005-10-04) * the whole document * | 1-11 | |

TECHNICAL FIELDS SEARCHED (IPC)

H04B
H04Q

The present search report has been drawn up for all claims

| Place of search | Date of completion of the search | Examiner |
|---|---|---|
| Munich | 29 October 2013 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

12

**ANNEX TO THE EUROPEAN SEARCH REPORT
ON EUROPEAN PATENT APPLICATION NO.**

EP 13 17 2865

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2013

| Patent document cited in search report | Publication date | Patent family member(s) | Publication date |
|---|---|---|---|
| US 6952529 B1 | 04-10-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. GHAZISAEDI ; L-A RUSCH.** *J. Lightwave Technol,* 2011, vol. 20, 21